Europäisches Patentamt

European Patent Office

Office européen des brevets

(19)

(11) Veröffentlichungsnummer: **0 299 156**
**A2**

(12) ## EUROPÄISCHE PATENTANMELDUNG

(21) Anmeldenummer: **88106870.4**

(22) Anmeldetag: **29.04.88**

(51) Int. Cl.⁴: **B60J 7/057**

(30) Priorität: **16.07.87 DE 3723453**

(43) Veröffentlichungstag der Anmeldung:
**18.01.89 Patentblatt 89/03**

(84) Benannte Vertragsstaaten:
**DE FR GB IT SE**

(71) Anmelder: **Webasto AG Fahrzeugtechnik**
**Kraillingerstrasse 5**
**D-8035 Stockdorf(DE)**

(72) Erfinder: **Fürst, Arpad**
**Ravensburger Ring 49**
**D-8 München 60(DE)**
Erfinder: **Wingen, Bernhard**
**Höhenrainerstrasse 3**
**D-8152 Feldkirchen(DE)**

(54) Vorrichtung zum Steuern der Verschiebe und Ausstellbewegung des Deckels von Schiebe-Hebedächern.

(57) Vorrichtung zum Steuern der Verschiebebewegung und der Ausstellbewegung des Deckels von Schiebehebedächern an Fahrzeugen mit einem eingangsseitigen Antriebselement und einem ausgangsseitigen Abtriebselement, von dem sowohl die Verschiebebewegung als auch die Ausstellbewegung abgeleitet wird. Es ist eine funktionsmäßig zwischen das Antriebselement und das Abtriebselement geschaltete, ein Planetengetriebe aufweisende Getriebeanordnung vorgesehen, die bei einem Antreiben des Antriebselements ausgehend von einer einer Deckelbezugsstellung entsprechenden vorbestimmten Getriebstellung ihr Übersetzungsverhältnis in Abhängigkeit von der Antriebsrichtung selbsttätig derart ändert, daß bei gleicher Antriebsgeschwindigkeit die Ausstellbewegung langsamer als die Verschiebebewegung erfolgt. Die Getriebeanordnung weist ein Doppelumlaufgetriebe auf. Es ist ferner eine Sperrvorrichtung vorgesehen, die bei dem von der vorbestimmten Getriebestellung ausgehenden Antreiben des Antriebselements in Abhängigkeit von der Antriebsrichtung selbsttätig ein erstes bzw. ein zweites Getriebeelement des Doppelumlaufgetriebes festhält.

FIG. 4

## Vorrichtung zum Steuern der Verschiebe- und Ausstellbewegung des Deckels von Schiebehebedächern

Die Erfindung bezieht sich auf eine Vorrichtung zum Steuern der Verschiebebewegung und der Ausstellbewegung des Deckels von Schiebehebedächern an Fahrzeugen mit einem eingangsseitigen Antriebselement und einem ausgangsseitigen Abtriebselement, von dem sowohl die Verschiebebewegung als auch die Ausstellbewegung abgeleitet wird, sowie mit einer funktionsmäßig zwischen das Antriebselement und das Abtriebselement geschalteten, ein Planetengetriebe aufweisenden Getriebeanordnung, die bei einem Antreiben des Antriebselements ausgehend von einer einer Deckelbezugsstellung entsprechenden vorbestimmten Getriebestellung ihr Übersetzungsverhältnis in Abhängigkeit von der Antriebsrichtung selbsttätig derart ändert, daß bei gleicher Antriebsgeschwindigkeit die Ausstellbewegung langsamer als die Verschiebebewegung erfolgt.

Bei einer bekannten Vorrichtung dieser Art (DE-PS 34 33 600) ist eine Schaltkupplung mit einem axial verstellbaren Schaltrad vorgesehen, welche das Planetengetriebe für die Ausstellbewegung wirksam macht, während für die Verschiebebewegung eine unmittelbare Verbindung zwischen Antriebselement und Abtriebselement hergestellt wird.

Dem im Anspruch angegebenen Erfindungsgegenstand liegt die Aufgabe zugrunde, eine Steuervorrichtung der eingangs genannten Art zu schaffen, die ohne zusätzliche Schaltkupplung auskommt.

Diese Aufgabe wird erfindungsgemäß dadurch gelöst, daß die Getriebeanordnung ein Doppelumlaufgetriebe aufweist und daß eine Sperrvorrichtung vorgesehen ist, die bei dem von der vorbestimmten Getriebestellung ausgehenden Antreiben des Antriebselements in Abhängigkeit von der Antriebsrichtung selbsttätig ein erstes bzw. ein zweites Getriebeelement des Doppelumlaufgetriebes festhält.

Die Steuervorrichtung nach der Erfindung gestattet es in gleicher Weise wie die aus der DE-PS 34 33 600 bekannte Vorrichtung, ein und das selbe Abtriebselement bei Antreiben des Antriebselements ausgehend von der vorbestimmten Getriebestellung in Abhängigkeit von der Antriebsrichtung mit unterschiedlicher Übersetzung zwischen Antriebs- und Abtriebselement anzu treiben, erfordert, jedoch keine zusätzliche Schaltkupplung. Vielmehr sind sämtliche Getriebeelemente ständig in gegenseitigem Eingriff.

Zwar ist es auch bekannt (DE-OS 35 45 869), ein Doppelumlaufgetriebe zum Antrieb der Deckelanordnung eines Fahrzeugdaches vorzusehen.

Dabei handelt es sich aber um ein Verteilergetriebe mit zwei Abtriebselementen, die mit unterschiedlichen Übersetzungen getrennt oder gemeinsam angetrieben werden sollen.

In weiterer Ausgestaltung der Erfindung sind in der vorbestimmten Getriebestellung das erste und das zweite Getriebeelement festgehalten, das Doppelumlaufgetriebe ist gesperrt, und die Sperrvorrichtung gibt bei dem von der vorbestimmten Getriebestellung ausgehenden Antreiben des Antriebselements in Abhängigkeit von der Antriebsrichtung das erste bzw. das zweite Getriebeelement selbsttätig frei. Das Sperren des Doppelumlaufgetriebes verhindert in der vorbestimmten Getriebestellung ein unerwünschtes Verstellen des Getriebes von der Abtriebsseite her. Im Falle eines Handantriebes wird dadurch ausserdem das Erreichen der Deckelbezugsstellung kenntlich gemacht. Dabei versteht es sich, daß für ein Schiebehebedach mit unter der festen Dachfläche zurückschiebbarem Deckel die Deckelbezugsstellung die Schließlage des Dekkels ist, während im Falle eines Schiebehebedaches mit über der festen Dachfläche nach hinten schiebbarem Deckel (einem sogenannten Spoilerdach) die Deckelbezugsstellung diejeinige Stellung ist, in welcher der Deckel voll ausgestellt seine vordere Endlage einnimmt.

Die Sperrvorrichtung kann zweckmäßig zwei Sperriegel aufweisen, die in der vorbestimmten Getriebestellung mit dem ersten bzw. dem zweiten Getriebeelement in Sperreingriff kommen, wobei bei Antreiben des Antriebselements ausgehend von der vorbestimmten Getriebestellung in der einen oder der anderen Richtung jeweils einer der Sperriegel aus dem Sperreingriff selbsttätig herausbewegt wird. Die Sperriegel rasten vorteilhaft in der vorbestimmten Getriebestellung unter Federvorspannung in eine Rastausnehmung des ersten bzw. des zweiten Getriebeelements ein, wobei die Sperriegel und die Rastausnehmungen zweckmäßig miteinander zusammenwirkende Schrägflächen aufweisen, welche den jeweiligen Sperriegel bei von der vorbestimmten Getriebestellung ausgehendem Antreiben des Antriebselements in der einen bzw. der anderen Richtung entgegen der Federvorspannkraft aus der Rastausnehmung herausdrücken.

Um die Sicherheit gegen Fehlfunktionen weiter zu erhöhen, ist in weiterer Ausgestaltung der Erfindung eine mit den Sperriegeln zusammenwirkende Umschalt-Sperrvorrichtung vorhanden, die, nachdem einer der beiden Sperrriegel aus dem Sperreingriff herausbewegt ist, ein Herausbewegen des jeweils anderen Sperriegels aus dem Sperreingriff verhindert. Ein besonders einfacher Aufbau wird dabei erreicht, wenn die Sperriegel in parallel zueinander verlaufenden Führungsbahnen geführt sind, die durch eine Zwischenwand voneinander getrennt sind, in einer Öffnung der Zwischenwand ein in Abhängigkeit von dem Verstellen der Sperriegel senkrecht zu der Bewegungsrichtung der Sperriegel verstellbares Sperrglied gelagert ist, dessen Abmessung in zur Bewegungsrichtung der Sperriegel senkrechter Richtung größer als die Dicke der Zwischenwand ist, und beide Sperriegel mit einer Ausnehmung versehen sind, in welche das Sperrglied unter Blockieren des jeweiligen Sperriegels und gleichzeitiger Freigabe des jeweils anderen Sperriegels eintauchen kann. Als Sperrglied kann einfach eine Kugel vorgesehen sein.

Ein besonders kompakter Aufbau wird erhalten, wenn dafür gesorgt ist, daß die Drehachsen des Antriebselements und des Abtriebselements zusammenfallen.

Das Doppelumlaufgetriebe kann vorteilhaft zwei mit dem Antriebselement drehfest verbundene, in Axialrichtung gegeneinander versetzt angeordnete Sonnenräder aufweisen, die jeweils mit mindestens einem ersten bzw. zweiten Planetenrad kämmen, wobei die ersten und zweiten Planetenräder auf einem gemeinsamen Planetenradträger frei drehbar sind und in Kämmeingriff mit einem ersten bzw. einem zweiten innenverzahnten Außenrad stehen, und wobei die Außenräder in Achsrichtung gegeneinander versetzt angeordnet sind sowie eines der Außenräder mit dem Abtriebselement drehfest verbunden ist. Dabei können zweckmäßig der gemeinsame Planetenradträger und das andere der Außenräder das mit der Sperrvorrichtung zusammenwirkende erste bzw. das zweite Getriebeelement bilden. Zu einem kompakten Aufbau trägt ferner bei, wenn die Drehachsen der Sonnenräder, des Planeteradträgers und der Außenräder mit den Drehachsen des Antriebselements und des Abtriebselements zusammenfallen. Vorteilhaft sind ferner die beiden Außenräder und der Planetenradträger mit koaxialen, paarweise ineinandergreifenden Lagerflächen versehen.

Ausführungsbeispiele der Erfindung werden im folgenden unter Bezugnahme auf die Zeichnungen beschrieben. Es zeigt:

Fig. 1 einen schematischen Längsschnitt durch ein Fahrzeugdach mit zurückgeschobenem Deckel,

Fig. 2 einen Schnitt entsprechend Fig. 1 bei in Schließstellung befidlichem Deckel,

Fig. 3 einen Schnitt entsprechend den Fign. 1 und 2 mit ausgestelltem Deckel,

Fig. 4 in größerem Maßstab die dem Antrieb des Deckels dienende Getriebeanordnung in dem Schnitt entlang der linie IV-IV der Fig. 6,

Fig. 5 einen Teilschnitt der Getriebeanordnung entlang der Linie V-V der fig. 6,

Fig. 6 eine teilweise geschnittene Draufsicht auf die Getriebeanordnung nach den Fign. 4 und 5 zusammen mit dem Antriebsmotor, und

Fig. 7 einen Schnitt ähnlich Fig. 4 für eine Getriebeanordnung mit Handantrieb.

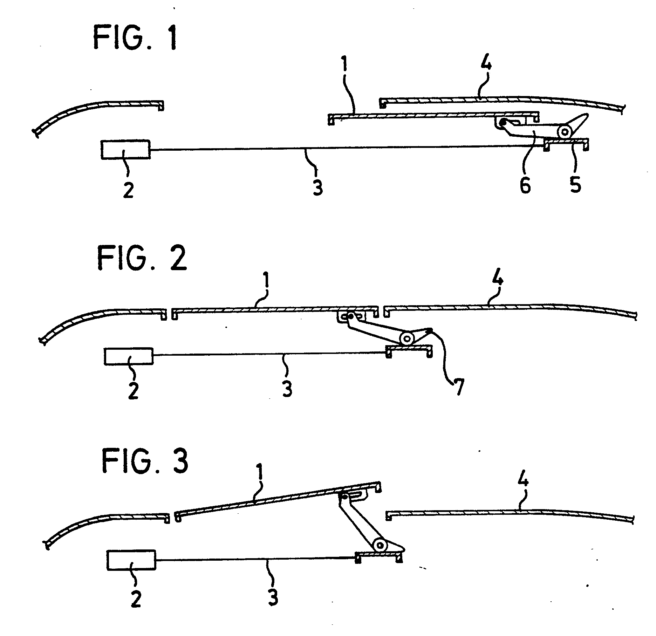

Bei dem Ausführungsbeispiel gemäß den Fign. 1 bis 3 läßt sich der Deckel 1 eines Schiebehebedachs mittels einer Antriebsvorrichtung 2 über drucksteife Kabel 3 aus der in Fig. 2 dargestellten Schließstellung wahlweise nach hinten unter das feste Dachteil 4 schieben (Fig. 1) oder in die in Fig. 3 veranschau lichte Lage ausstellen. Die Kabel 3 sind im Ausführungsbeispiel mit einer Transportbrücke 5 verbunden, die einen Hebelmechanismus 6 trägt, der einerseits mit dem Deckel 1 verbunden und andererseits bei 7 in einer nichtgezeigten Kulissenführung geführt ist.

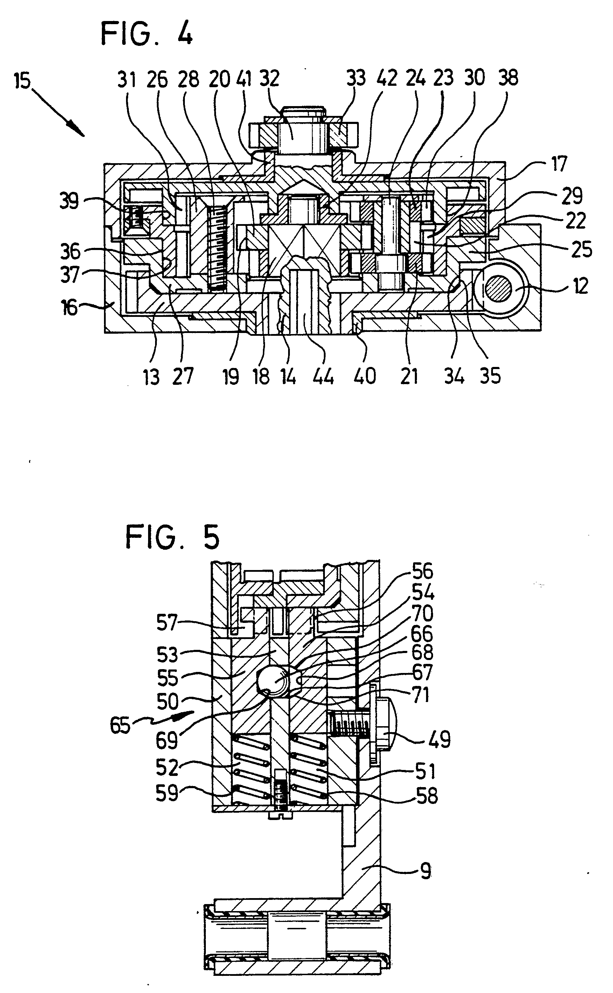

Ein erstes Ausführungsbeispiel der Antriebsvorrichtung 2 ist in den Fign. 4 bis 6 im einzelnen dargestellt. Dabei sitzt auf einer Trägerplatte 9 ein Elektromotor 10, dessen Abtriebswelle 11 mit einer Schnecke 12 verbunden ist. Die Schnecke 12 kämmt mit einem Schneckenrad 13, das mit einer antriebsseitigen Welle 14 eines Doppelumlaufgetriebes 15 drehfest verbunden ist. Das Doppelumlaufgetriebe 15 ist in einem Gehäuse untergebracht, das von einem an der Trägerplatte 9 angegossenen Gehäuseunterteil 16 und einem auf dieses aufgesetzten Gehäuseoberteil 17 gebildet ist. Auf der Welle 14 sind über Abflachungen 18 zwei Sonnenräder 19 und 20 drehfest gelagert, die in Axialrichtung gegeneinander versetzt angeordnet sind. Das Sonnenrad 19 kämmt mit drei in Umfangsrichtung um 120° gegeneinander versetzten Planetenrädern 21, von denen in Fig. 4 nur eines dargestellt ist. Das Sonnenrad 20 steht in Eingriff mit den unteren Teilen 22 von drei als Stufenräder ausgebildeten Plantenrädern 23. Die Plantenräder 21 und 23 sind auf drei Wellen 24 frei drehend gelagert. Die Wellen 24 haben von der Welle 14 gleichen Radialabstand und sind um die Welle 14 in Winkelabständen von 120° gleichmäßig verteilt. Die beiden Enden der Wellen 24 sind in einem Unterteil 25 bzw. einem Oberteil 26 eines gemeinsamen Planetenradträger 27 abgestützt. Unter- und Oberteil 25 und 25 des Planetenradträgers 27 sind mittels Schrauben 28 zusammengehalten.

Die Planetenräder 21 stehen in Kämmeingriff mit einem ersten innenverzahnten Außenrad 29, während ein oberer Teil 30 der Planetenräder 23, der einen größeren Durchmesser als der untere Teil 22 aufweist, mit einem zweiten innenverzahnten Außenrad 31 in Kämmeingriff steht. Die Außenräder 29 und 31 sind in Achsrichtung gegeneinander versetzt angeordnet. An dem zweiten Außenrad 31 ist ein Wellenstumpf 32 angebracht, beispielsweise angeformt, mit dem ein Ritzel 33 drehfest verbunden ist. Das Ritzel 33 steht seinerseits mit den Kabeln 3 in Eingriff. Wie insbesondere aus Fig. 4 hervorgeht, fallen die Drehachsen der antriebsseitigen Welle 14, des abtriebsseitigen Ritzels 33, der Sonnenräder 19, 20, des Planetenradträgers 27 und der Außenräder 29, 31 zusammen.

Das Unterteil 25 des Planetenradträgers 27 greift mit einer zylindrischen Lagerfläche 34 in eine zylindrische Lagerfläche 35 des Schneckenrades 13 ein. Das Unterteil 25 des Planetenradträgers 27 ist des weiteren mit einer zylindrischen Lagerfläche 36 versehen, die mit einer zylindrischen Lagerfläche 37 des Außenrades 29 zusammenwirkt. Eine weitere zylindrische Lagerfläche 38 des Außenrades 29 wirkt mit einer zylidrischen Lagerfläche 39 des Außenrades 31 zusammen. Über die Lagerflächen 34 bis 39 sind die Räder 13, 29 31 und der Planetenradträger 27 großflächig aneinander abgestützt. Das Schneckenrad 13 und das mit dem Ritzel 33 drehfest verbundene Außenrad 31 liegen in Axialrichtung zu beiden Seiten des Planetenradträgers 27 und sind über Lagerbuchsen 40, 41 in dem Gehäuseunterteil 16 bzw. dem Gehäuseoberteil 17 drehbar gelagert. Das Außenrad 31 ist ferner in seinem zentralen Teil über eine Lagerbuchse 42 an einem zylindrischen Fortsatz 43 der Welle 14 drehbar abgestützt. An die zylindrischen Lagerflächen 34, 37 und 39 des Planetenradträgers 27 und der Außenräder 29, 31 grenzen jeweils ebene, stirnseitige Lagerflächen an, über welche die genannten Getriebeelemente auf dem jeweils darunter liegenden Bauteil, d.h. dem Schneckenrad13, dem Unterteil 25 des Planetenradträgers 27 bzw. dem Außenrad 29, in Axialrichtung abgestützt sind. Das Schneckenrad 13 weist einen zentrischen Innensechskant 44 auf, der sich nach unten öffnet und der bei einem Ausfall des Elektromotors 10 bzw. der Bordspannung eine Notbetätigung des Deckels 1 von Hand über eine entsprechendes Werkzeug zuläßt.

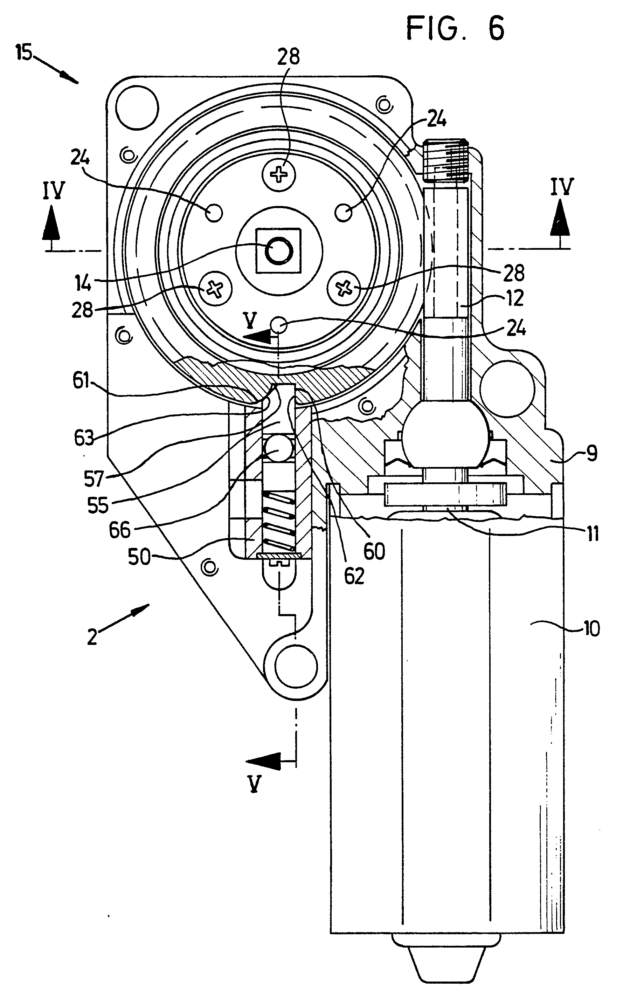

Dem Doppelumlaufgetriebe 15 ist eine insgesamt mit 48 bezeichnete Sperrvorrichtung (Fign. 5 und 6) zugeordnet. Die Sperrvorrichtung 48 weist ein mit der Trägerplatte 9 über eine Schraube 49 verbundenes Riegelgehäuse 50 auf, das zwei parallel zueinander verlaufende, zur Drehachse der Welle 14 radial ausgerichtete Führungsbahnen 51, 52 bildet. Die Führungsbahnen 51, 52 sind durch eine Zwischenwand 53 voneinander getrennt. In jeder der Führungsbahnen 51, 52 ist ein Sperriegel 54 bzw. 55 verschiebbar gelagert. Am Außenrad des er sten Außenrades 29 sowie des Unterteils 25 des Planetenradträgers 27 sind jeweils eine Rastausnehmung 56 bzw. eine Rastausnehmung 57 ausgebildet. Die Anordnung ist so getroffen, daß die Rastausnehmung 56 mit dem dem Getriebe 15 zugewendeten Ende der Führungsbahn 51 und gleichzeitig die Rastausnehmung 57 mit dem dem Getriebe 15 benachbarten Ende der Führungsbahn 52 radial ausgerichtet ist, wenn sich das Getriebe in einer Stellung befindet, in welcher der Deckel 1 die Schließstellung gemäß Fig. 2 einnimmt. In dieser vorbestimmten Getriebestellung greifen beide Sperriegel 54, 55 unter dem Einfluß von Vorspannfedern 58 bzw 59, welche auf die von dem Getriebe 15 abliegende Seite der Sperriegel 54, 55 einwirken, in die Rastausnehmung 56 bzw. in die Rastausnehmung 57 ein (Fig. 5).

Die Rastausnehmungen 56, 57 sind in Umfangsrichtung jeweils von einer im wesentlichen radial verlaufenden Fläche 60 und einer Schrägfläche 61 begrenzt, wie dies in Fig. 6 für die Rastausnehmung 57 des Außenrades 29 dargestellt ist. Entsprechend weisen die Sperriegel 54, 55 an ihrem dem Getriebe 15 zugewendeten Ende jeweils eine radial gerichtete Außenfläche 62 und eine zu den Schrägflächen 61 jeweils komplementär verlaufende Schrägfläche 63 auf.

Mit den Sperriegeln 54, 55 wirkt eine Umschalt-Sperrvorrichtung 65 zusammen, die ein als Kugel ausgebildetes Sperrglied 66 aufweist. Das Sperrglied 66 ist in einer Öffnung 67 der Zwischenwand 53 so gelagert, daß es in Abhängigkeit von einer Verstellung der Sperriegel 54, 55 eine Bewegung senkrecht zu der Bewegungsrichtung der Sperriegel ausführen kann. Der Durchmesser des Sperrglieds 66 ist größer als die Dicke der Zwischenwand 53, so daß das Sperrglied 66 ein- oder beidseitig über die Zwischenwand 53 vorsteht. Dabei kann der vorstehende Teil des Sperrglieds 66 von einer Ausnehmung 68 und/oder einer Ausnehmung 69 des Sperriegels 54 bzw. 55 aufgenommen werden. Die Ausnehmungen 68, 69 sind in Radialrichtung der Welle 14 beidseits von je einer Schrägfläche 70 bzw. 71 begrenzt.

Steht der Deckel 1 in der in Fig. 2 veranschaulichten Schließstellung (in diesem Fall der Deckelbezugsstellung), sind beide Rastausnehmungen 56, 57 des Planeten radträgers 27 und des Außenrades 29 mit den Führungsbahnen 51, 52 des Riegelgehäuses 50 ausgerichtet. Die Sperriegel 54, 55 rasten unter dem Einfluß der Vorspannfedern 58, 59 in die Rastausnehmungen 56, 57 ein. Das Doppelumlaufgetriebe 15 ist gesperrt.

Wird nun der Elektromotor 10 mit einer solchen Drehrichtung gestartet, daß er das Schneckenrad 13 in Fig. 4 von unten gesehen im Uhrzeigersinn dreht, wird auf den Planetenradträger 27 über die Planetenräder 21 Antriebskraft im Uhrzeigersinn sowie auf das Außenrad 29 entgegen dem Uhrzeigersinn ausgeübt. Der Planetenradträger 27 rückt durch das Zusammenwirken zwischen der Schrägfläche 61 der Rastausnehmung 56 und der Schrägfläche 63 des Sperriegels 54 den Sperriegel 54 aus de Rastausnehmung 56 heraus. Der Planetenradträger 27 kann sich infolgedessen nun frei drehen, während das Außenrad 29 über den Sperriegel 55 blockiert bleibt. Über die Schrägfläche 70 des Sperriegels 54 wird das Sperrglied 66 in die in Fig. 5 veranschaulichte Lage gedrückt, in welcher das Sperrglied 66 in die Ausnehmung 69 des Sperriegels 55 eingreift. Durch die an die Ausnehmung 68 nach vorne anschließende, der Zwischenwand 53 zugewendete Außenfläche des Sperriegels 54 wird das Sperrglied 66 in dieser Lage gehalten. Ein unbeabsichtigtes Ausrasten des Sperriegels 55 ist ausgeschlossen. Das über die Welle 14 gleichfalls im Uhrzeigersinn angetriebene Sonnenrad 20 treibt über die Planetenräder 23 das Außenrad 31 und mit ihm das Ritzel 33 entgegen dem Uhrzeigersinn an. Dabei ist eine hohe Übersetzung ins Langsame zwischen der Welle 14 und dem Ritzel 33 wirksam. Der Deckel 1 läßt sich feinfühlig in jede beliebige Ausstellage zwischen der Schließstellung gemäß Fig. 2 und der voll ausgestellten Position gemäß Fig. 3 bringen. Wird bei voll oder ganz ausgestelltem Deckel 1 die Drehrichtung des Elektromotors 10 umgekehrt, verhindert der ausgerastete Sperriegel 54 im Zusammenwirken mit dem Sperrglied 66 ein Ausrasten des Sperriegels 55. Das Außenrad 29 wird weiter festgehalten. Der Deckel 1 wird in Richtung auf die Schließstellung (Fig. 2) abgesenkt.

Wird ausgehend von der Schließstellung gemäß Fig. 2 der Elektromotor 10 mit einer solchen Drehrichtung gestartet, daß das Schneckenrad 13 (wiederum in Fig. 4 von unten gesehen) entgegen dem Uhrzeigersinn gedreht wird, wird über das Sonnenrad 19 und die Planetenräder 21 auf den Planetenradträger 27 und das Außenrad 29 Antriebskraft in solcher Richtung übertragen, daß sich der Planetenradträger 27 entgegen dem Uhrzeigersinn und das Außenrad 29 im Uhrzeigersinn - d.h. in der Draufsicht gemäß Fig. 6 entgegen dem Uhrzeigersinn - zu drehen suchen. Bei dieser Antriebsdrehrichtung schiebt das Außenrad 29 über seine Schrägfläche 61 den Sperriegel 55 aus der Rastausnehmung 57 heraus, während der Sperriegel 54 in die Rastausnehmung 56 des Planetenradträgers 27 eingerastet bleibt. Über das Sonnenrad 20, die Planetenräder 23 und das Außenrad 31 wird das Ritzel 33 (bei Blick von unten in Fig. 4) im Uhrzeigersinn angetrieben. Bei dieser Drehrichtung des Ritzels 33 wird der Deckel 1 von der Schließstellung gemäß Fig. 2 ausgehend nach hinten unter das feste Dachteil 4 verschoben (Fig. 1). Dabei ist zwischen der Welle 14 und dem Ritzel 33 eine relativ niedrige Übersetzung ins Langsame wirksam.

Durch das Herausdrücken des Sperriegels 55 aus der Rastausnehmung 57 wird das Sperrglied 66 in Fig. 5 nach rechts verschoben, so daß es in die Ausnehmung 68 des Sperriegels 54 eingreift. In dieser Stellung wird das Sperrglied durch den ausgerasteten Sperriegel 55 gehalten. Die zuvor geschilderten Eingriffbedingungen bleiben daher auch erhalten, wenn der Deckel 1 aus der voll zurückgeschobenen Stellung oder aus einer Zwischenstellung zwischen der voll zurückgeschobenen Stellung und der Schließstellung durch Umkehr der Antriebsrichtung des Elektromotors 10 in Richtung auf die Schließstellung verstellt wird. Erst bei Erreichen der Deckelschließstellung wird das Sperrglied 66 wieder freigegeben.

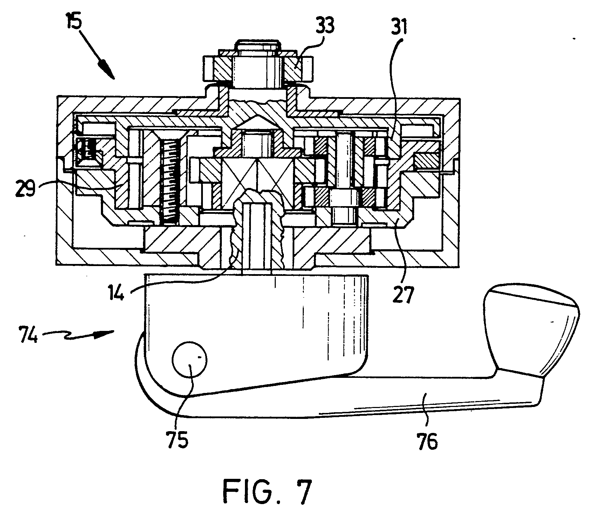

Die abgewandelte Ausführungsform gemäß Fig. 7 weist statt eines Motorantriebs mit Elektromotor 10, Schnecke 12 und Schneckenrad 13 eine mit der antriebsseitigen Welle 14 drehfest verbundene Handkurbel 74 auf. Die Handkurbel 74 ist in bekannter Weise als Klappkurbel mit einem um einen Gelenkbolzen 75 verschwenkbaren Kurbelarm 76 ausgebildet.

Während in den Fign. 1 bis 3 ein Schiebehebedach mit unter das feste Dachteil 4 verschiebbarem Deckel 1 dargestellt ist, eignet sich die vorliegend erläuterte Antriebsvorrichtung 2 ohne weiteres auch für sogenannte Spoilerdächer, bei denen der ausgestellte Deckel nach hinten über das feste Dachteil 4 verschoben wird. Bei einem solchen Dach ist die Deckelbezugsstellung nicht die Schließstellung, sondern die voll ausgestellte lage des in seiner vorderen Endstellung befindlichen Deckels.

## Ansprüche

1. Vorrichtung zum Steuern der Verschiebebewegung und der Ausstellbewegung des Deckels von Schiebehebedächern an Fahrzeugen mit einem eingangsseitigen Antriebselement und einem ausgangsseitigen Abtriebselement, von dem sowohl die Verschiebebewegung als auch die Ausstellbewegung abgeleitet wird, sowie mit einer funktionsmäßig zwischen das Antriebselement und das Abtriebselement geschalteten, ein Planetengetriebe aufweisenden Getriebeanordnung, die bei einem Antreiben des Antriebselements ausgehend von einer einer Deckelbezugsstellung entsprechenden vorbestimmten Getriebestellung ihr Übersetzungsverhältnis in Abhängigkeit von der Antriebsrichtung selbsttätig derart ändert, daß bei gleicher Antriebsgeschwindigkeit die Ausstellbewegung langsamer als die Verschiebebewegung erfolgt, **dadurch gekennzeichnet,** daß die Getriebanordnung ein Doppelumlaufgetriebe (15) aufweist, und daß eine Sperrvorrichtung (48) vorgesehen ist, die bei dem von der vorbestimmten Getriebestellung ausgehenden Antreiben des Antriebselements (Welle 14) in Abhängigkeit von der Antriebsrichtung selbsttätig ein erstes bzw. ein zweites Getriebeelement (27, 29) des Doppelumlaufgetriebes festhält.

2. Vorrichtung nach Anspruch 1, dadurch gekennzeichnet, daß in der vorbestimmten Getriebestellung das erste und das zweite Getriebeelement (27, 29) festgehalten sind und das Doppelumlaufgetriebe (15) gesperrt ist, und daß die Sperrvorrichtung (48) bei dem von der vorbestimmten Getriebestellung ausgehenden Antreiben des Antriebselements (Welle 14) in Abhängigkeit von der Antriebsrichtung das erste bzw. das zweite Getriebeelement selbsttätig freigibt.

3. Vorrichtung nach Anspruch 2, dadurch gekennzeichnet, daß die Sperrvorrichtung (48) zwei Sperriegel (54, 55) aufweist, die in der vorbestimmten Getriebestellung mit dem ersten bzw. dem zweiten Getriebeelement (27, 29) in Sperreingriff kommen, und daß bei Antreiben des Antriebselements (Welle 14) ausgehend von der vorbestimmten Getriebestellung in der einen oder der anderen Richtung jeweils einer der Sperriegel aus dem Sperreingriff selbsttätig herausbewegt wird.

4. Vorrichtung nach Anspruch 3, dadurch gekennzeichnet, daß die Sperriegel (54, 55) in der vorbestimmten Getriebestellung unter Federvorspannung in eine Rastausnehmung (56, 57) des ersten bzw. des zweiten Getriebeelements (27, 29) einrasten.

5. Vorrichtung nach Anspruch 3, dadurch gekennzeichnet, daß die Sperriegel (54, 55) und die Rastausnehmungen (56, 57) miteinander zusammenwirkende Schrägflächen (61, 63) aufweisen, welche den jeweiligen Sperriegel bei von der vorbestimmten Getriebestellung ausgehendem Antreiben des Antriebselements (Welle 14) in der einen bzw. der anderen Richtung entgegen der Federvorspannkraft aus der Rastausnehmung herausdrücken.

6. Vorrichtung nach einem der Ansprüche 3 bis 5, gekennzeichnet durch eine mit den Sperriegeln (54, 55) zusammenwirkende Umschalt-Sperrvorrichtung (65), die, nachdem einer der beiden Sperriegel aus dem Sperreingriff herausbewegt ist, ein Herausbewegen des jeweils anderen Sperriegels aus dem Sperreingriff verhindert.

7. Vorrichtung nach Anspruch 6, dadurch gekennzeichnet, daß die Sperriegel (54, 55) in parallel zueinander verlaufenden Führungsbahnen (51, 52 geführt sind, die durch eine Zwischenwand (53) voneinander getrennt sind, daß in einer Öffnung (67) der Zwischenwand ein in Abhängigkeit von dem Verstellen der Sperriegel senkrecht zu der Bewegungsrichtung der Sperriegel verstellbares Sperrglied (66) gelagert ist, dessen Abmessung in zur Bewegungsrichtung der Sperriegel senkrechter Richtung größer als die Dicke der Zwischenwand ist, und daß beide Sperriegel mit einer Ausnehmung (68, 69) versehen sind, in welche das Sperrglied unter Blockieren des jeweiligen Sperriegels und gleichzeitiger Freigabe des jeweils anderen Sperriegels eintauchen kann.

8. Vorrichtung nach Anspruch 7, dadurch gekennzeichnet, daß das Sperrglied (66) als Kugel ausgebildet ist.

9. Vorrichtung nach einem der vorhergehenden Ansprüche, dadurch gekennzeichnet, daß die Drehachsen des Antriebselements (Welle 14) und des Abtriebselements (Ritzel 33) zusammenfallen.

10. Vorrichtung nach einem der vorhergehenden Ansprüche, dadurch gekennzeichnet, daß das Doppelumlaufgetriebe (15) zwei mit dem Antriebselement (Welle 14) drehfest verbundene, in Axialrichtung gegeneinander versetzt angeordnete Sonnenräder (19, 20) aufweist, die jeweils mit mindestens einem ersten bzw. zweiten Planetenrad (21, 23) kämmen, daß die ersten und zweiten Planetenräder auf einem gemeinsamen Planetenradträger (27) frei drehbar gelagert sind und in Kämmeingriff mit einem ersten bzw. einem zweiten innenverzahnten Außenrad (29, 31) stehen, und daß die Aussenräder in Achsrichtung gegeneinander versetzt angeordnet sind sowie eines der Außenräder (31) mit dem Abtriebselement (Ritzel 33) drehfest verbunden ist.

11. Vorrichtung nach Anspruch 10, dadurch gekennzeichnet, daß der gemeinsame Planetenradträger (27) und das andere der Außenräder (29) das mit der Sperrvorrichtung (65) zusammenwirkende erste bzw. das zweite Getriebeelement bilden.

12. Vorrichtung nach Anspruch 9 und Anspruch 10 oder 11, dadurch gekennzeichnet, daß die Drehachsen der Sonnenräder (19, 20), des Planetenradträgers (27) und der Außenräder (29, 31) mit den Drehachsen des Antriebselements (Welle 14) und des Abtriebselements (Ritzel 33) zusammenfallen.

13. Vorrichtung nach einem der Ansprüche 10 bis 12, dadurch gekennzeichnet, daß die beiden Außenräder (29, 31) und der Planetenradträger (27) mit koaxialen, paarweise ineinandergreifenden Lagerflächen (36, 37; 38, 39) versehen sind.

FIG. 1

FIG. 2

FIG. 3

## FIG. 4

## FIG. 5

FIG. 6

FIG. 7